# EUROPÄISCHE PATENTANMELDUNG

(11) **EP 0 889 175 A2**
(43) Veröffentlichungstag der Anmeldung: **07.01.1999**
(21) Anmeldenummer: 98110985.3
(22) Anmeldetag: 16.06.1998
(51) Int. Cl.: E04D 11/00, E04B 1/70, E04F 13/04

(54) **Multifunktionale Mineralfaserplatte, Verfahren zu deren Herstellung und deren Verwendung**

(30) Priorität: 02.07.1997 DE 19728184
(71) Anmelder: FRAUNHOFER-GESELLSCHAFT ZUR FÖRDERUNG DER ANGEWANDTEN FORSCHUNG E.V., 80636 München (DE)
(72) Erfinder: Künzel, Hartwig, Dr., 83626 Valley (DE)
(74) Vertreter: Pfenning, Meinig & Partner

(57) **Zusammenfassung**

Die Erfindung betrifft eine multifunktionale Mineralfaserplatte, bei der die Mineralfaserplatte aus einem hydrophoben und einem hydrophilen Teil besteht.

## Beschreibung

Die Erfindung betrifft eine multifunktionale Mineralfaserplatte, Verfahren zu deren Herstellung und deren Verwendung.

In DE 195 07 041 A1 ist eine Unterputzmatte beschrieben, die zur Sanierung von feuchtem, versalzenem Mauerwerk eingesetzt werden soll. Dabei wird eine sogenannte Distanzlage aus unverrotbarem Material an der Wand befestigt, auf der auf deren anderen Seite ganzflächig eine Verdunstungs- und Flüssigkeitsdrainagelage ausgebildet ist, in die Feuchtigkeit und Salz aufgenommen und durch Hinterlüftung Wasser und Salz abgegeben werden kann. Nach außen können dann ein herkömmlicher Putzaufbau aufgetragen sein.

Es ist aber nicht in jedem Fall möglich eine solche Hinterlüftung an jeder Gebäudewand einzusetzen, so daß der gewünschte Effekt nicht immer eintreten kann.

Außerdem ist die Anwendung auf die Sanierung von feuchten und versalzenen Wänden begrenzt.

Herkömmliche Mineralfaserplatten werden für die Isolierung und Wärmedämmung eingesetzt und können außerdem für den Feuerschutz in Gebäuden für Wände und Decken verwendet werden.

Eine kombinierte Vervendung solcher Mineralfaserplatten für andere Anwendungen ist, außer einer Kombination mit wasserdichten Beschichtungen aus Kunststoffolien oder Metallfolien, bisher nicht bekannt.

Es ist daher Aufgabe der Erfindung ein Möglichkeit zu schaffen, mit der Mineralfaserplatten vielseitig für verschiedene Anwendungen eingesetzt werden können.

Erfindungsgemäß wird diese Aufgabe mit den Merkmalen des Anspruchs 1 gelöst. Vorteilhafte Ausgestaltungsformen und Weiterbildungen sind mit den Merkmalen in den untergeordneten Ansprüchen möglich.

Die erfindungsgemäßen Mineralfaserplatten können mit ihrer zweiteiligen Ausbildung für mehr als eine Anwendung in geeigneter Form, ohne zusätzlichen Aufwand verwendet werden, wobei jedoch eine gewisse Anpassung an die jeweilige Anwendung ohne weiteres zusätzlich möglich ist.

Mit dem Schichtaufbau der neuen Mineralfaserplatten, die auf einer Seite hydrophob und auf der anderen Seite hydrophil sind, können diese beispielsweise in erfinderischer Weise mit der hydrophoben Seite zum Gebäude für die Begrünung von Fassaden und Dächern eingesetzt werden. Dabei wird auf der hydrophilen Seite der Bewuchs durch Einbringen von Pflanzensamen, Stecklingen und ggf. von Nährstoffen erreicht. Samen und Nährstoffe können bereits bei der Fertigung in den hydrophilen Teil eingebracht werden, was sich besonders bei der Verwendung auf Dächern und Fassaden vorteilhaft auswirkt.

Die Fixierung der erfindungsgemäßen Mineralfaserplatten kann mit mechanischen Mitteln (Anker, Dübel, Schienen, Rahmen u.a.) oder auch durch Verklebung erfolgen.

Durch Regen, Beregnung oder künstliche Befeuchtung wird die Begrünung der Platten erreicht. Für die Begrünung sind bevorzugt auf der Wetterseite Flechten und Moose geeignet. Für Steildächer kann die Begrünung bevorzugt mit bestimmten Gräsern erfolgen, die nach der Austrocknung analog zu Reeddächern das Regenwasser ableiten und die Dämmung langfristig trocken halten.

Werden die erfindungsgemäßen Mineralfaserplatten für die Sanierung von versalzenen Wänden eingesetzt, wird die hydrophile Seite direkt auf der versalzenen Gebäudewand (Mauerwerk) angeordnet und die Feuchtigkeit wird mit dem Salz in den hydrophilen Teil aufgenommen und dort gespeichert. Das von der Wand abgeführte Salz wird im hydrophilen Teil aufgenommen, kristallisiert, insbesondere im Übergangsbereich zwischen hydrophoben und hydrophilen Teil aus und wird dort langfristig gespeichert, ohne daß ein weiterer Schaden im Plattenmaterial oder an der Wand angerichtet wird.

Günstig ist es, die Wand vor der Anbringung der erfindungsgemäßen Platten zu Befeuchten um den Salztransport in den hydrophilen Teil zu beschleunigen.

Neben der Entsalzung wird gleichzeitg die mit den Mineralfaserplatten belegte Wand an ihrer Außenseite getrocknet, was durch die hygroskopische Wirkung des Salzes in vielen Fällen erforderlich und mit der Erfindung erreichbar ist.

Die Mineralfaserplatten nach der Erfindung können ebenfalls mechanisch befestigt oder angeklebt werden, wobei die Kleber salz- und feuchtigkeitsresisistent und für sie durchlässig sein sollten. Es kann aber auch eine lokal begrenzte Verklebung eingesetzt werden, wobei dann der größte Teil der Oberfläche des hydrophilen Teiles der Mineralfaserplatten in direktem Kontakt mit der Wand steht.

Auf die hydrophobe dann Außenseite der Platte kann ein herkömmlicher Putzaufbau mit einem gewebearmierten Unterputz und einem mineralischen Oberputz, ein Wärmeverbundsystem ausbildend, aufgebracht werden.

Daneben sind aber auch andere Anwendungen denkbar, bei den sich die hydrophoben und hydrophilen Eigenschaften der erfindungsgemäßen Mineralfaserplatten vorteilhaft auswirken können.

In jedem Fall wirkt aber der hydrophobe Teil bzw. die hydrophobe Schicht als Feuchtigkeitssperre.

Die erfindungsgemäßen Mineralfaserplatten aus Stein- oder Glaswolle können aus zwei verschieden behandelten Einzelplatten als Verbundplatte eingesetzt werden. Dabei können eine hydrophobe und eine hydrophile Platte miteinander verbunden werden. Die Verbindung kann mechanisch unter Verwendung von Klammern oder Rahmen aber auch durch Kleben hergestellt werden.

Dabei können die Schichtdicken unterschiedlich, der jeweiligen Anwendung angepaßt, gewählt werden. In der Regel wird jedoch der hydrophile Teil dicker als der hydrophobe Teil sein. Insbesondere bei der Anwendung für die Bergünung kann der hydrophile Teil ein mehrfaches der Dicke des anderen Teiles aufweisen.

Vorteilhaft können aber auch verschiedene Plattendicken, wie bei einem Baukastensystem, je nach Bedarf miteinander zu einer Mineralfaserplatte anwendungsspezifisch kombiniert werden.

Die erfindungsgemäßen Mineralfaserplatten können aber auch durch unterschiedliche Behandlung der beiden Seiten einer Rohmineralfaserplatte hergestellt werden. Dabei wird zumindest die Menge des jeweilgen Benetzungsmittles zur Hydrophobierung und Hydrophilierung unterschiedlich eingestellt, um unterschiedliche der jeweiligen Anwendung und ggf. der Gesamtdicke der Platte angepaßte Schichtdicken der verschiedenen Teile der Mineralfaserplatten zu erhalten.

Neben den üblicherweise verwendeten Glas- oder Steinwollefasern können aber auch andere Fasermaterialien verwendet werden, wie sie auf anderen Gebieten der Technik bereits eingesetzt werden, so sind auch entsprechend behandelte organische Fasern denkbar.

Für die Hydrophobierung können z.B. Silikonöle und als hydrophile Netzmittel z.B. neben verschiedenen Tensiden, Kieselsäureesther oder Wasserglas eingesetzt werden.

## Patentansprüche

1. Multifunktionale Mineralfaserplatte, dadurch gekennzeichnet, daß die Mineralfaserplatte aus einem hydrophoben und einem hydrophilen Teil besteht.

2. Multifunktionale Mineralfaserplatte nach Anspruch 1, dadurch gekennzeichnet, daß der hydrophobe und der hydrophile Teil der Platte miteinander verbunden sind.

3. Multifunktionale Mineralfaserplatte nach Anspruch 1 oder 2, dadurch gekennzeichnet, daß das Dickenverhältnis der hydrophoben und hydrophilen Teile anwendungsspezifisch unterschiedlich ist.

4. Multifunktionale Mineralfaserplatte nach einem der Ansprüche 1 bis 3, dadurch gekennzeichnet, daß in den hydrophilen Teil Pflanzensamen und Nährstoffe eingebracht sind.

5. Multifunktionale Mineralfaserplatte nach einem der Ansprüche 1 bis 4, dadurch gekennzeichnet, daß die Mineralfasern im hydrophoben Teil mit Hydrophobierungsmittel und im hydrophilen Teil mit Hydrophilierungsmittel benetzt sind.

6. Verfahren zur Herstellung einer multifunktionalen Mineralfaserplatte nach Anspruch 1, dadurch gekennzeichnet, daß der hydrophobe und der hydrophile Teil miteinander verbunden werden.

7. Verfahren nach Anspruch 6, dadurch gekennzeichnet, daß die beiden Teile mechanisch miteinander verbunden werden.

8. Verfahren nach Anspruch 6, dadurch gekennzeichnet, daß die beiden Teile miteinander verklebt werden.

9. Verfahren zur Herstellung einer multifunktionalen Mineralfaserplatte nach Anspruch 1, dadurch gekennzeichnet, daß eine einzige Mineralfaserplatte auf einer Seite mit Hydrophobierungsmittel und auf der anderen Seite mit Hydrophilierungsmittel behandelt wird.

10. Verfahren nach Anspruch 9, dadurch gekennzeichnet, daß die Menge an Hydrophobierungsmittel und Hydrophilierungsmittel anwendungsspezifisch und/oder dickenabhängig eingestellt wird.

11. Verwendung einer multifunktionalen Mineralfaserplatte nach Anspruch 1 an Fassaden, Flach- oder Steildächern von Gebäuden zu deren Begrünung.

12. Verwendung einer multifunktionalen Mineralfaserplatte nach Anspruch 1 zur Sanierung von versalzenen Gebäudewänden.
